# EUROPÄISCHE PATENTANMELDUNG

(11) **EP 2 374 713 A2**
(43) Veröffentlichungstag der Anmeldung: **12.10.2011**
(21) Anmeldenummer: 11161292.5
(22) Anmeldetag: 06.04.2011
(51) Int. Cl.: B64C 1/14

(54) **Türrahmenanordnung und Tür, insbesondere für Luft- oder Raumfahrzeuge**

(30) Priorität: 08.04.2010 DE 102010014265
(71) Anmelder: Deutsches Zentrum für Luft- und Raumfahrt e.V., 51147 Köln (DE)
(72) Erfinder: Kolesnikov, Boris, 38104, Braunschweig (DE); Ströhlein, Tobias, 38110, Braunschweig (DE); Assing, Heiko, 38110, Braunschweig (DE); Hühne, Christian, 63584, Gründau (DE); Fink, Axel, 38104, Braunschweig (DE); Niemann, Steffen, 38440, Wolfsburg (DE)
(74) Vertreter: Einsel, Martin

(57) **Zusammenfassung**

Eine Türrahmenanordnung für einen Rumpf, insbesondere eines Luft- oder Raumfahrzeugs besitzt einen Türausschnitt (20) in dem Rumpf (10). Der Bereich (11) des Rumpfes (10) um den Türausschnitt (20) ist in Semimonocoque-Bauweise mit einer Haut (12), Stringern (13) und Spanten (14) aufgebaut. Der Türausschnitt (20) wird von einer verschließbaren Tür (30) ausgefüllt, welche in Semimonocoque-Bauweise mit einer Haut (32), Querversteifungselementen (33) und Längsversteifungselementen (34) aufgebaut ist. Außerdem ist vorgesehen, dass in dem Bereich (11) des Rumpfes (10) um den Türausschnitt (20) benachbart zu zumindest einer Ecke (21, 22, 23, 24) des Türausschnitts (20) mindestens ein zusätzliches Versteifungselement (41, 42, 43, 44) angeordnet ist, welches mit den Stringern (13) und Spanten (14) des Flugzeugrumpfes (10) in diesem Bereich (11) ein lokales Fachwerksystem (51) bildet, und dass in der Tür (30) mindestens ein zusätzliches Versteifungselement (46, 48) angeordnet ist, welches bei verschlossener Tür (30) mit den Stringern (13) und Spanten (14) des Bereiches (11) des Flugzeugrumpfes (10) um den Türausschnitt (20) ein lokales Fachwerksystem (53) bildet, und dass das zusätzliche Versteifungselement (46, 48) an der Verbindungslinie zwischen der Tür (30) und dem Bereich (11) des Flugzeugrumpfes (10) um den Türausschnitt (20) kraftschlüssige, lösbare Verbindungen (57, 58) aufweist.

## Beschreibung

Die Erfindung betrifft eine Türrahmenanordnung für einen Rumpf insbesondere eines Luft- oder Raumfahrzeugs, mit einem Türausschnitt in dem Rumpf, wobei zumindest ein Bereich des Rumpfes um den Türausschnitt in Semimonocoque-Bauweise mit einer Haut, Stringern und Spanten aufgebaut ist, mit einer verschließbaren Tür in dem Türausschnitt, welche in Semimonocoque-Bauweise mit einer Haut, Querversteifungselementen und Längsversteifungselementen aufgebaut ist.

Luft- oder Raumfahrzeuge, insbesondere große Passagierflugzeuge, besitzen häufig Rümpfe, die aus Bauelementen in Semimonocoque-Bauweise aufgebaut sind. Dies stellt beispielsweise bei Flugzeugen der Typen Airbus A-320 und Boeing 737 die am häufigsten verwendete Bauweise für Rümpfe, Flügel und Leitwerke dar.

Im Unterschied zur Monocoque-Bauweise werden bei einer Semimonocoque-Bauweise nicht nur selbsttragende Häute oder Beplankungen eingesetzt, sondern die Bauteile besitzen neben den Häuten und Beplankungen außerdem Verstärkungen in Form von Stringern und zusätzlich meist in Form von Rippen oder Spanten. Die Bauelemente für die Rümpfe bestehen meist aus Metall, es sind jedoch auch schon Rümpfe aus Faserverbundwerkstoffen beispielsweise für Flugzeuge des Typs Boeing 787 in der Praxis eingesetzt worden.

In den Rümpfen dieser Passagierflugzeuge oder auch anderer Fahrzeuge der Luft- und Raumfahrt sind auch Türausschnitte vorgesehen, um den Zutritt für Passagiere, Besatzung und Fracht zu ermöglichen. Die Türausschnitte sind mit einem Türrahmen versehen, in welchen Türen mit Türblättern eingesetzt sind, wobei die Türblätter gegenüber den Türrahmen aufschwenkbar sind, wie dies beispielsweise in der EP 0 677 438 B1 beschrieben ist.

Die Türblätter selbst sind, wie in der EP 0 677 438 B1 dargestellt, ebenfalls für sich in Semimonocoque-Bauweise aufgebaut.

Angesichts der erheblichen Kräfte, die auf die Türblätter durch die unterschiedlichen Druckverhältnisse im Inneren des Luft- oder Raumfahrzeugs und außerhalb dieses Fahrzeuges einwirken, ist den Verriegelungssystemen der Türblätter in den Türrahmen schon eine große Aufmerksamkeit geschenkt worden, wie beispielsweise in der DE 698 17 911 T2 für eine Tür mit Zapfenverriegelung für einen Flugzeugnotausgang über einem Flügel beschrieben wird.

Die Türausschnitte sowohl für Notausstiege als auch die für die im Normalfall zu benutzenden Türen weisen üblicherweise eine viereckige Kontur auf. Da die Rümpfe der Passagierflugzeuge im Querschnitt und damit auch quer zum Türausschnitt gerundet sind, sind auch die Türauschnitte und die Türrahmenbauteile entsprechend der Kontur der Umgebungsstruktur des Türausschnittes geformt, wie man beispielsweise auch der DE 10 2007 015 007 A1 entnehmen kann. Die Umgebungsstruktur des Türausschnittes ist ebenso, wie der übrige Rumpf im Semimonocoque-Bauweise mit Häuten, Stringern und Spanten versehen, wobei zur Verstärkung noch zusätzlich Interkostalstreben die Kräfte der Rahmenbauteile in die Häute und Spanten einleiten.

Darüber hinaus sind im Hinblick auf die wirkenden Kräfte oberhalb und unterhalb des Türausschnitts verstärkte Stringer vorgesehen und auf der linken und rechten Seite des Türausschnitts verstärkte Spanten.

Darüber hinaus wird vorgesehen, das Hautfeld in der Umgebung des Türausschnittes mit Aufdickungen zu versehen, wobei die stärksten Aufdeckungen und die größten Aufdickungsflächen in den Eckbereichen der Türausschnitte konzentriert werden. Dabei wird eine Aufdickung der Haut um bis zum Faktor 4 und gelegentlich auch mehr vorgesehen.

Die Türblätter für die Passagierflugzeuge werden im geschlossenen Zustand auf sogenannten "door stops" schwimmend gelagert.

Neben der bereits erwähnten Beanspruchung der Türen, Türrahmen und der Umgebungsstruktur der Türausschnitte werden diese Umgebungsstrukturen auch durch Querkräfte, Innendruck, Torsions- und Biegemomente beansprucht. Diese Beanspruchungsarten führen zu erheblichen lokalen Spannungsüberhöhungen im Bereich um den Türauschnitt. Die höchsten Werte für derartige Spannungsüberhöhungen treten in den Eckbereichen der viereckigen Türausschnitte auf, weshalb dort auch die oben erwähnten in diesen Bereichen angeordneten Hautaufdickungen vorgesehen sind.

Die Hautbereiche mit den lokalen Aufdickungen werden herkömmlich entweder durch ein lokales sogenanntes chemisches Fräsen oder aber mittels eines Dopplersystems erzeugt. Diese unterschiedlichen Hautdicken führen dazu, dass die in diesen Bereichen verlaufenden Stringer und Spanten unter Umständen mehrstufige Sprünge von Gurten aufweisen, wodurch lokale Exzentrizitäten und daraus resultierende lokale zusätzliche Biegebeanspruchungen der Versteifungselemente hervorgerufen werden. Darüber hinaus kann es zu Toleranzproblemen beim Zusammenbau der Bauelemente kommen.

Alle diese Effekte erhöhen einerseits die Kosten und andererseits auch das Gewicht der eingesetzten Bauelemente. Dies wiederum beeinträchtigt die Wirtschaftlichkeit und die sonst gegebenen Vorteile des Leichtbaus.

Die Spannungsüberhöhungen in den Strukturen der Umgebung des Türausschnittes können sogar zu deutlichen Diagonalverformungen der Türausschnitte führen, wenn keine hinreichenden Hautverdickungen berücksichtigt werden. Die Diagonalverformungen der Türausschnitte können ihrerseits die Verschlusssicherheit der Türblätter in dem Türrahmen beeinträchtigen. Dies liegt unter Anderem daran, dass bei entsprechenden Verformungen der Türausschnitte die door stops nicht mehr korrekt positioniert werden können.

Verschärft werden die vorgenannten Probleme dann, wenn wie zunehmend relevant die Rümpfe von großen Passagierflugzeugen nicht aus Metall, sondern zumindest teilweise auch aus Faserverbundwerkstoffen hergestellt werden sollen, beispielsweise aus Carbon- oder Kohlenstofffaserverbundwerkstoffen (CFK-Werkstoffe).

Aufgabe der Erfindung ist es demgegenüber, Vorschläge für eine Verbesserung dieser Situation bei Türausschnitten in Fahrzeugen der Luft- und Raumfahrt vorzulegen.

Diese Aufgabe wird mit der Erfindung bei einer gattungsgemäßen Tür dadurch gelöst, dass in dem Bereich des Rumpfes um den Türausschnitt benachbart zu zumindest einer Ecke des Türausschnitts mindestens ein zusätzliches Versteifungselement angeordnet ist, welches mit den Stringern und Spanten des Flugzeugrumpfes in diesem Bereich ein lokales Fachwerksystem bildet, und dass in der Tür mindestens ein zusätzliches Versteifungselement angeordnet ist, welches bei verschlossener Tür mit den Stringern und Spanten des Bereiches des Flugzeugrumpfes um den Türausschnitt ein lokales Fachwerksystem bildet, und dass das zusätzliche Versteifungselement an der Verbindungslinie zwischen der Tür und dem Bereich des Flugzeugrumpfes um den Türausschnitt kraftschlüssige, lösbare Verbindungen aufweist.

Mit einer derartigen Konzeption stehen erhebliche Vorteile. Die Struktur wird deutlich stabiler und es treten nur noch in geringem Maße Diagonalverformungen auf. Das bedeutet, dass die Türen besser schließen und weniger Aufwand betrieben werden muss, damit sie den Öffnungs- und Schließvorgang auch einwandfrei durchführen.

Die Türen halten in den Türausschnitten durch diese Maßnahmen unter Umständen auch dann, wenn nur eine reduzierte Anzahl an door stops zusätzlich eingebracht wird.

Auf Aufdickungen kann verzichtet werden, was die Kosten und im Ergebnis auch das Gewicht der insgesamt eingesetzten Bauelemente reduziert.

Dadurch wird die Gesamtkonzeption wirtschaftlicher und die Vorteile des Leichtbaus können besser genutzt werden.

Dies ist gerade auch bei der Produktion der Rümpfe für große Passagierflugzeuge aktuell, da die Herstellbarkeit aus Faserverbundwerkstoffen, beispielsweise aus kohlenstofffaserverstärkten Verbundwerkstoffen (CFK), deutlich verbessert wird. Diese Werkstoffe besitzen nämlich gegenläufige Eigenschaften für die Zugbeanspruchung und die Druckbeanspruchung einerseits und die Scherbeanspruchung andererseits in Abhängigkeit von den Faserorientierungen und ihrem Laminataufbau. Gerade die Umgebungsstrukturen des Flugzeugrumpfes im Bereich um den Türausschnitt unterliegen aber in Eckbereichen von viereckigen Türausschnitten besonders hohen gleichzeitig auftretenden Zug-, Druck- und Scherbeanspruchungen. Letztere werden erfindungsgemäß nun zuverlässig in Zug- und Druckbeanspruchungen transformiert und so ausgeglichen.

Dadurch werden die strukturmechanischen Gewichtsvorteile des Einsatzes von Faserverbundwerkstoffen deutlich besser ausgenutzt.

Beim Zusammenbau entstehende lokale Biegebeanspruchungen und hohe interlaminare Scherbeanspruchungen in den stufigen Springergurten und Spantengurten können durch die verbesserten Toleranzen in den Häuten aufgrund nicht mehr erforderlicher lokaler Aufdickungen ebenfalls besser berücksichtigt werden.

Damit wird eine hohe Ausnutzung der günstigen Eigenschaften von Faserverbundwerkstoffen mit einer polymeren Matrix gefördert, zumal die interlaminare Scherfestigkeit von Faserverbundwerkstoffen relativ niedrig ist.

Herkömmlich gelegentlich entstehende zufällige fachwerkähnliche Strukturen aus Interkostalstreben, Spanten und Stringern sind eher als allgemeine Versteifung im mittleren Bereich weit entfernt von den Eckbereichen der Türausschnitte in Flugzeugrümpfen aufgetreten, beispielsweise in der DE 10 2007 015 007 A1. Diese Hautversteifungen beeinflussen daher nicht den Spannungszustand der Haut an Eckbereichen und können diesen Spannungszustand mithin nicht reduzieren. Im Gegensatz dazu wirkt die erfindungsgemäße Konzeption gerade dort, wo die Spannungskonzentrationsfaktoren am höchsten sind.

Als besonders vorteilhaft hat es sich herausgestellt, wenn bei einer Tür in einem Türausschnitt mit vier Ecken der Bereich des Rumpfes um den Türausschnitt benachbart zu allen vier Ecken mit zusätzlichen Versteifungselementen ausgerüstet ist.

Dadurch können die Spannungen in allen betroffenen Ecken eines Türausschnittes gleichmäßig beziehungsweise gezielt berücksichtigt werden.

Von Vorteil ist es darüber hinaus, wenn die zusätzlichen Versteifungselemente des Bereiches des Rumpfes um den Türausschnitt und/oder die zusätzlichen Versteifungselement der Tür stabförmig ausgebildete Elemente sind.

Dies ist eine besonders zuverlässige und in ihren Effekten besonders gut vorhersagbare Möglichkeit des Aufbaus der erfindungsgemäßen Türrahmenanordnungen.

Weitere vorteilhafte Merkmale sind in den Unteransprüchen angegeben und werden auch anhand der Beschreibung einiger bevorzugter Ausführungsformen in der Zeichnung deutlicher werden.

Im Folgenden werden anhand der Zeichnung einige Ausführungsbeispiele der Erfindung näher erläutert. Es zeigen:
- **Figur 1**: eine erste Ausführungsform der Erfindung in einer flächenhaft dargestellten Aufsicht;
- **Figur 2**: die Ausführungsform aus Figur 1 in einer dreidimensionalen Darstellung;
- **Figur 3**: eine Darstellung ähnlich Figur 1 mit zusätzlich eingetragenen Beanspruchungslinien;
- **Figur 4**: eine alternative Ausführungsform der Erfindung in einer Darstellung ähnlich Figur 1;
- **Figur 5**: die Ausführungsform aus Figur 4 in einer dreidimensionalen Darstellung;
- **Figur 6**: eine dreidimensionale Darstellung eines leicht modifizierten Ausführungsbeispiels aus der Figur 5;
- **Figur 7**: eine Draufsicht auf eine weitere Ausführungsform der Erfindung;
- **Figur 8**: eine Darstellung einer gegenüber der Figur 7 leicht modifizierten Ausführungsform der Erfindung;
- **Figur 9**: eine dreidimensionale Darstellung der Ausführungsform aus Figur 8; und
- **Figur 10**: eine Darstellung einer gegenüber der Figur 9 leicht modifizierten Ausführungsform der Erfindung.

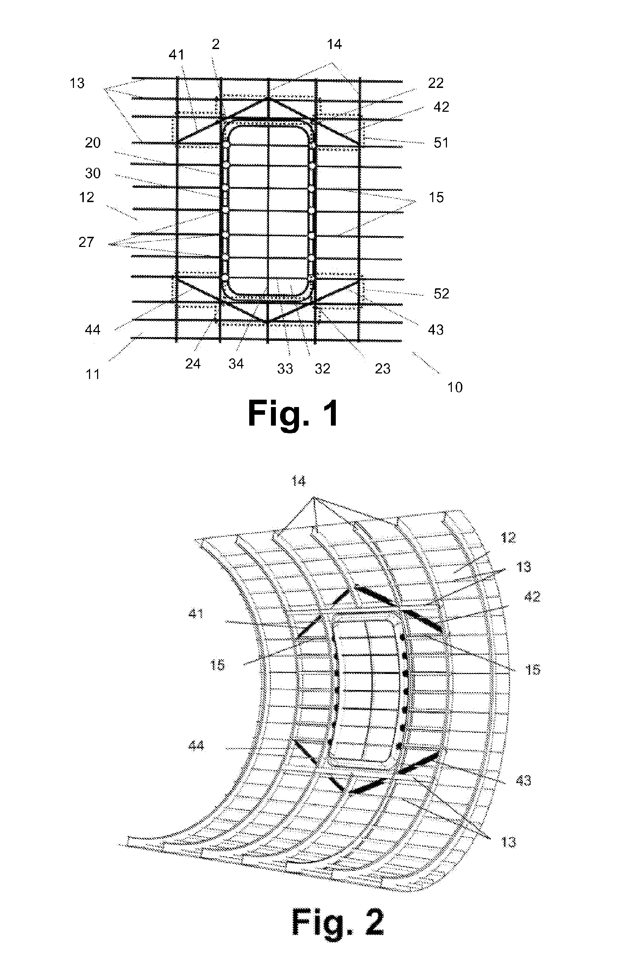

In der **Figur 1** ist ein Flugzeugrumpf 10 dargestellt, und zwar in Form eines Türausschnittbereiches 11. Die Darstellung erfolgt in Aufsicht, wobei man den inneren Aufbau des Türausschnittbereiches 11 des Flugzeugrumpfes 10 erkennen kann. Man sieht, dass der Flugzeugrumpf 10 in diesem Bereich 11 in Semimonocoque-Bauweise aufgebaut ist. Eine Umgebungsstruktur des Türausschnittbereiches 11 besitzt eine Haut 12. Die Haut 12 ist versteift mit Stringern 13, Spanten 14 und Interkostalstreben 15.

In dem Flugzeugrumpf 10 befindet sich im Türausschnittbereich 11 ein Türausschnitt 20. Der Türausschnitt 20 ist viereckig mit vier Ecken 21, 22, 23 und 24.

Der Türausschnitt 20 wird von einer Tür 30 verschlossen. Diese Tür 30 kann aufgeschwenkt oder in anderer Weise geöffnet werden, was in der Figur 1 jedoch der Einfachheit halber nicht dargestellt ist. Die Tür 30 besitzt, wie auch der Türausschnittbereich 11 des Flugzeugrumpfes 10, eine Haut 32. Die Haut 32 ist an diese angrenzend mit Querversteifungselementen 33 und Längsversteifungselementen 34 versteift.

Die Tür 30 ist in geschlossenem Zustand dargestellt. In diesem Zustand ist sie "schwimmend" auf sogenannten "door stops" 27 gelagert. Die Tür 30 wird nur durch Innendruck beansprucht und bildet keine mittragende Struktur für den Türausschnittbereich 11 des Flugzeugrumpfes 10.

Benachbart zu den Ecken 21, 22, 23 und 24 des Türausschnittes 20 sind in dem Türausschnittbereich 11 des Rumpfes 10 Zusatzversteifungselemente 41, 42, 43 und 44 vorgesehen und angeordnet. Diese Zusatzversteifungselemente sind als krummlinige Elemente in dieser Ausführungsform ausgebildet. Sie bilden gemeinsam mit benachbarten Stringern 13, Spanten 14 und Interkostalstreben 15 lokale krummlinige Fachwerksysteme 51 und 52.

In der **Figur 2** wird das in der Figur 1 gezeigte Schema des Türausschnittbereiches 11 des Flugzeugrumpfes 10 als eine 3D-Darstellung abgebildet. Die Zusatzversteifungselemente 41 , 42, 43 und 44 sind als krummlinige Elemente gut zu erkennen, die zum Beispiel ein L-Profil aufweisen. Diese krummlinigen L-Profile sind sowohl mit benachbarten Elementen wie den Stringern 13, den Spanten 14 und den Interkostalstreben 15 als auch mit der Haut 12 verbunden.

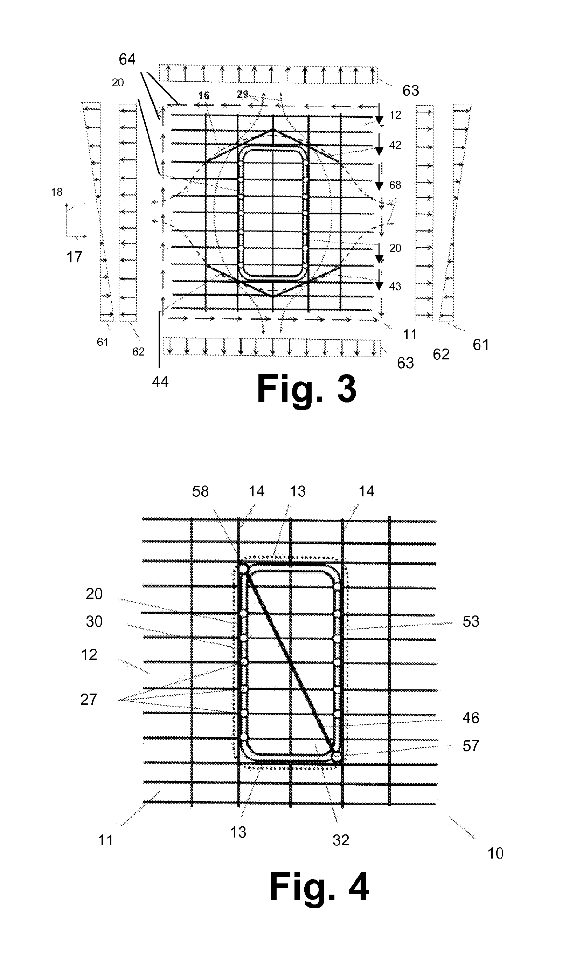

In der Figur 3 sind mögliche Belastungen für die Haut 12 an den Rändern der Umgebungsstruktur für eine bestimmte Entfernung vom Türausschnitt 20 dargestellt. Man erkennt die durch eine Biegebeanspruchung des Flugzeugrumpfes 10 hervorgerufenen Normalspannungen 61, die durch eine Innendruckbeanspruchung in der Längsrichtung 17 des Rumpfes 10 und der Umfangsrichtung 18 des Rumpfes 10 hervorgerufenen Normalspannungen 62 beziehungsweise 63 und die durch eine Querkraft- und Torsionsmomentbeanspruchung hervorgerufenen Tangentialspannungen 64.

Schematisch sind darüber hinaus die durch die Belastungen 61, 62 und 63 hervorgerufenen maximalen Hauptspannungen 68 und 69 in der Haut 12 der Umgebungsstruktur im Türausschnittbereich 11 des Flugzeugrumpfes 10 beziehungsweise deren Verläufe dargestellt.

Die Stabelemente der Zusatzversteifungselemente 41, 42, 43 und 44 befinden sich in den Eckbereichen 21, 22, 23 und 24 des Türausschnittes 20 der Umgebungsstruktur des Türausschnittbereiches 11 des Flugzeugrumpfes 10, und zwar dort, wo die Haut 12 die höchsten Spannungskonzentrationsfaktoren in Folge jeder der Beanspruchungsarten 61, 62, 63 und 64 aufweist.

Die durch Zusatzversteifungselemente 41, 42, 43 und 44 gebildeten Fachwerksysteme 51 und 52 ermöglichen einerseits eine Transformation der Schubbeanspruchungen der Haut 12 in Normalkräfte dieser Fachwerkelemente. Andererseits sind die Zusatzversteifungselemente 41, 42, 43 und 44 nahe zu den Verläufen der jeweiligen maximalen Hauptspannungen 68 und 69 angeordnet und werden dadurch sehr effektiv durch Normalkräfte beansprucht. Diese Normalkräfte werden weiter auf andere Elemente der Fachwerksysteme 51 und 52 verteilt.

Dadurch kann im Endeffekt eine deutliche Entspannung der Haut 12 beziehungsweise eine Reduzierung ihrer Aufdickungen erreicht werden. Dies führt zu einer Reduzierung der Anzahl der Hautstufen, einer Reduzierung der Toleranzproblematik und schließlich zu einer Erhöhung der Wirtschaftlichkeit. Der Türausschnittbereich 11 des Rumpfes 10 kann aus Faserverbundwerkstoffen hergestellt werden. Durch einen Laminataufbau der Faserverbundwerkstoffe, welcher durch unidirektional orientierte (UD) Fasern, zumindest in den Elementen der Fachwerksysteme 51 und 52 und insbesondere in den Zusatzversteifungselementen beziehungsweise Stabelementen 41, 42, 43 und 44 dominiert wird, kann eine höhere Festigkeits- und Steifigkeitsausnutzung der eingesetzten Faserverbundwerkstoffe und dadurch eine noch weiter vergrößerte Hautentspannung beziehungsweise eine noch höhere Reduzierung der Hautaufdickungen erfolgen. Auch die Diagonalverformungen des Türausschnittes 20 können reduziert und der Toleranzproblematik beim Zusammenbau kann begegnet werden.

In der **Figur 4** ist eine Ausführungsform einer mittragenden Tür 30 dargestellt. Diese Tür 30 besitzt ein zusätzliches Versteifungselement 46 als eine Diagonale des Türausschnittes 20. Das Versteifungselement 46 bildet mit den benachbarten Stringern 13 und Spanten 14 der Umgebungsstruktur des Türausschnittbereiches 11 des Flugzeugrumpfes 10 eine lokale Fachwerkstruktur 53. Das Versteifungselement 46 weist an der Grenze zwischen der Struktur der Tür 30 und der Struktur in der Umgebung des Türausschnittbereiches 11 kraftschlüssige und lösbare Verbindungen 57 und 58 mit den Stringern 13 und Spanten 14 der Umgebungsstruktur auf.

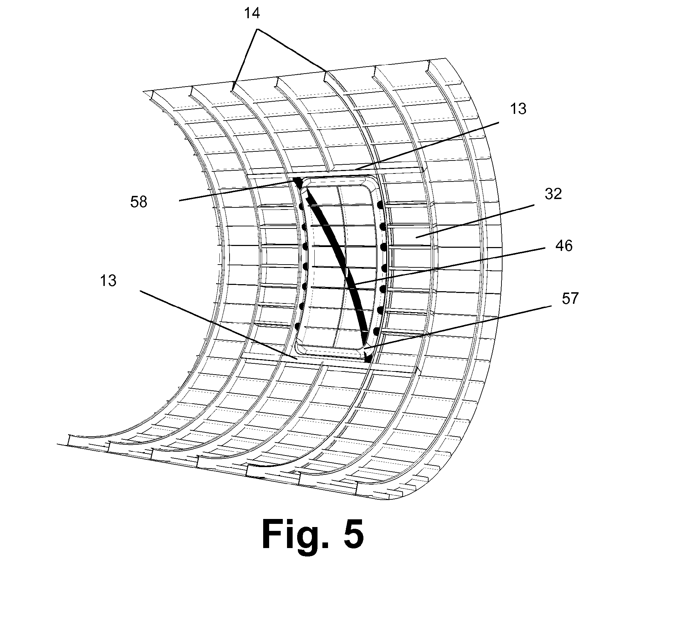

In der **Figur 5** ist das in der Figur 4 dargestellte Schema des Türausschnittbereiches 11 als eine 3D-Darstellung wiedergegeben. Man sieht hier das Zusatzversteifungselement 46 aus der Figur 4 mit einem beispielsweise T-förmigen Profil. Diese Ausführungsform eines Zusatzversteifungselements 46 mit seinem T-Profil weist ein mit der Haut 32 der Tür 30 verbundenes krummliniges Element auf. Bei dieser Ausführungsform wird das Versteifungselement 46 der Tür 30 nicht nur einer Zugbeanspruchung und einer Druckbeanspruchung im Rahmen der Fachwerkstruktur 53, sondern auch einer Biegebeanspruchung durch Innendruck ausgesetzt.

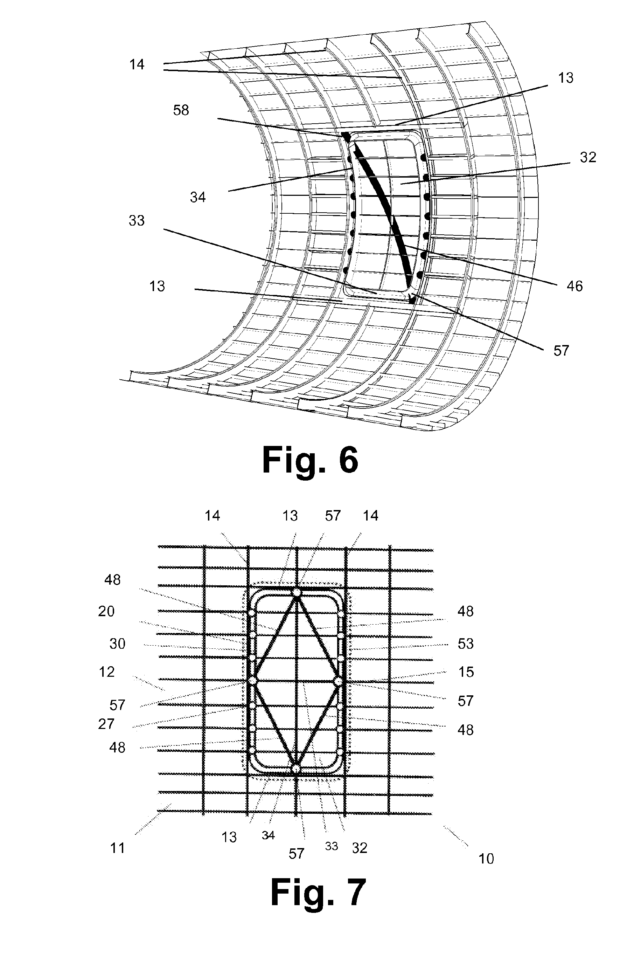

In der **Figur 6** wird eine andere 3D-Darstellung des in der Figur 4 dargestellten Schemas des Türausschnittbereichs 11 des Flugzeugrumpfes 10 dargestellt. Hier weist das Zusatzversteifungselement 46 ein nicht mit der Haut 32 der Tür 30 verbundenes geradliniges beispielsweise Rohrstabelement auf. Bei dieser Ausführungsform ist das geradlinige Rohrstabelement des zusätzlichen Versteifungselementes 46 nur durch eine Ankoppelung an die Querversteifungselemente 33 und die Längsversteifungselemente 34 mit der Struktur der Tür 30 verbunden. Das Rohrstabelement ist demnach nur durch Zug und Druck im Rahmen der Fachwerkstruktur 53 beansprucht.

In der **Figur 7** wird eine andere Ausführungsform einer mittragenden Tür 30 dargestellt. Diese Tür 30 besitzt vier zusätzliche Versteifungselemente 48, welche eine Form nach Art eines Rhombus aufweisen. Die Versteifungselemente 48 bilden mit benachbarten Elementen im Türausschnittbereich 11 des Flugzeugrumpfes 10, also beispielsweise mit Stringern 13 und mit Spanten 14 sowie zusätzlich mit den Querversteifungselementen 33 und den Längsversteifungselementen 34 der Tür 30 ein lokales Fachwerksystem 53.

Die Versteifungselemente 48 weisen auch an der Grenze zwischen der Struktur der Tür 30 und der Umgebung des Türausschnittbereiches 11 des Rumpfes 10 kraftschlüssige, lösbare Verbindungen 57 mit den Stringern 13 und den Spanten 14 des Türausschnittbereiches 11 des Flugzeugrumpfes 10 auf.

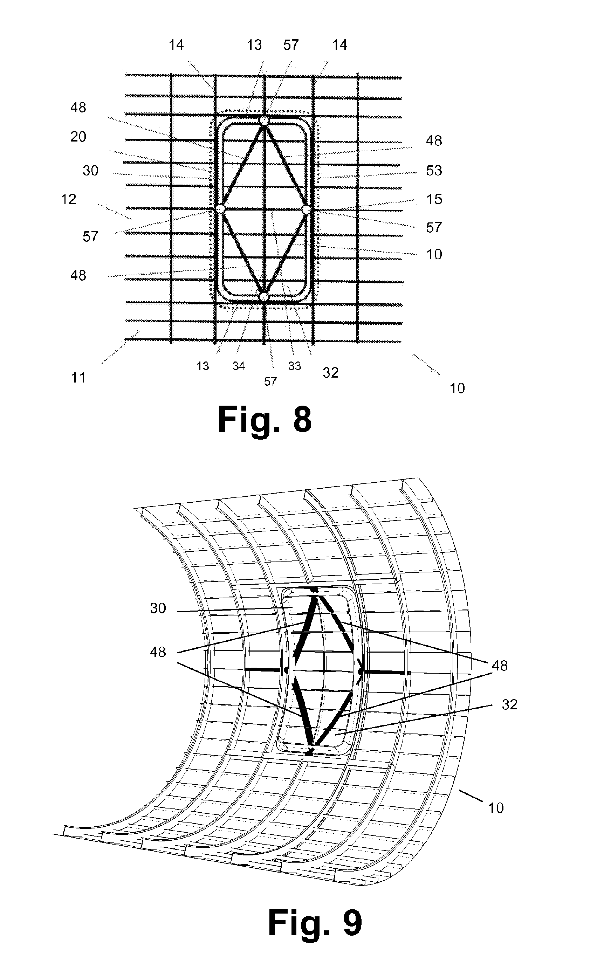

Bei dieser Ausführungsform kann die Anzahl der door stops 27 stark reduziert werden. Es ist möglich, dass lediglich vier kraftschlüssige und lösbare derartige Verbindungen 57 zugleich als door stops 27 arbeiten. Dies ist ergänzend in der **Figur 8** dargestellt.

In der **Figur 9** wird das in der Figur 8 dargestellte Schema des Türausschnittbereiches 11 des Flugzeugrumpfes 10 als eine 3D-Darstellung wiedergegeben. Auch hier sind die Versteifungselemente 48 zu erkennen, die in dieser Ausführungsform beispielsweise ein T-Profil aufweisen. Diese sind mit der Haut 32 der Tür 30 verbunden und weisen krummlinige Elemente auf. Bei dieser Ausführungsform werden die Versteifungselemente 48 der Tür 30 neben der Zugbeanspruchung und der Druckbeanspruchung im Rahmen des Fachwerksystems 53 auch einer Biegebeanspruchung durch Innendruck ausgesetzt.

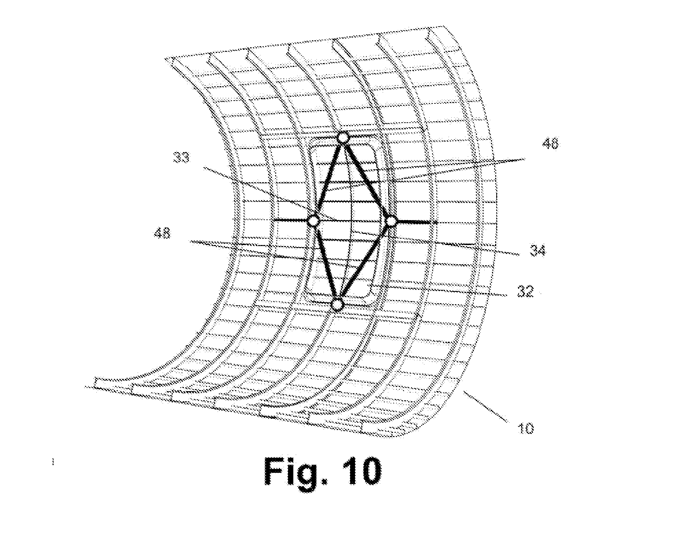

In der **Figur 10** wird eine weitere 3D-Darstellung ähnlich des in Figur 8 dargestellten Schemas des Türausschnittbereichs 11 gezeigt. Die Versteifungselemente 48 sind geradlinig und hier nicht mit der Haut 32 der Tür 30 verbunden. Sie sind in zwei verschiedenen Systemebenen angeordnet, nämlich die beiden oberen Versteifungselemente 48 in einer anderen Ebene als die beiden unteren Versteifungselemente 48 des Rhombus. Die Rohrstabelemente der beiden Systemebenen sind bei dieser Ausführungsform nur durch eine Ankoppelung an die Querversteifungselemente 33 und die Längsversteifungselemente 34 mit der Struktur der Tür 30 verbunden. Sie werden nur durch Zug und Druck im Rahmen des Fachwerksystems 53 beansprucht.

Die lokalen Fachwerksysteme 53 aus der Figur 4 und der Figur 8 der mittragenden Türen 30 sind wesentlich steifer als die Rahmenumgebungsstrukturen des Türausschnittbereiches 11 um den Türausschnitt 20 herum ohne zusätzliche mittragende Versteifungselemente. Dadurch kann eine deutliche Entlastung der Haut 12 in den Eckbereichen 21, 22, 23 und 24 des Türausschnittes 20 im Bereich des Türausschnittbereiches 11 des Flugzeugrumpfes 10 und damit auch eine Reduzierung der Hautaufdickungen erreicht werden.

Durch einen von unidirektional orientierten (UD) Fasern dominierten Laminataufbau des Faserverbundwerkstoffs in den Elementen der Fachwerksysteme, insbesondere in den Stabelementen, kann eine höhere Festigkeitsausnutzung sowie Steifigkeitsausnutzung von Faserverbundwerkstoffen erreicht werden. Dadurch erzielt man eine noch höhere Hautentspannung beziehungsweise eine noch höhere Reduzierung der Hautaufdickungen. Auch die Diagonalverformungen des Türausschnittes 20 werden reduziert und die Toleranzproblematik beim Zusammenbau kann gelöst werden.

Mittels Berechnungen mit der Finite Elemente Methode (FEM) und somit durchgeführten Analysen konnte bereits gezeigt werden, dass durch die erörterte Bauweise die Hautspannungen und die Hautaufdickungen ebenso wie die Diagonalverformungen der Türausschnitte 20 und das Strukturgewicht reduziert werden konnten.

### Bezugszeichenliste

- 10: Flugzeugrumpf
- 11: Bereich des Flugzeugrumpfes 10 um einen Türausschnitt
- 12: Haut des Flugzeugrumpfes 10
- 13: Stringer des Flugzeugrumpfes 10
- 14: Spanten des Flugzeugrumpfes 10
- 15: Interkostalstreben des Flugzeugrumpfes 10
- 17: Längsrichtung des Rumpfes 10
- 18: Umfangsrichtung des Rumpfes 10
- 20: Türausschnitt
- 21: Ecke des Türausschnitts
- 22: Ecke des Türausschnitts
- 23: Ecke des Türausschnitts
- 24: Ecke des Türausschnitts
- 27: Door stops
- 30: Tür
- 32: Haut der Tür 30
- 33: Querversteifungselement der Tür 30
- 34: Längsversteifungselement der Tür 30
- 41: zusätzliches Versteifungselement im Türausschnittbereich 11 des Flugzeugrumpfes 10
- 42: zusätzliches Versteifungselement im Türausschnittbereich 11 des Flugzeugrumpfes 10
- 43: zusätzliches Versteifungselement im Türausschnittbereich 11 des Flugzeugrumpfes 10
- 44: zusätzliches Versteifungselement im Türausschnittbereich 11 des Flugzeugrumpfes 10
- 46: zusätzliches Versteifungselement der Tür 30
- 48: zusätzliche Versteifungselemente in Form eines Rhombus
- 51: lokale krummlinige Fachwerksysteme
- 52: lokale krummlinige Fachwerksysteme
- 53: lokale Fachwerkstruktur
- 57: lösbare Verbindung
- 58: lösbare Verbindung
- 61: Normalspannungen
- 62: Normalspannungen
- 63: Normalspannungen
- 64: Tangentialspannungen
- 68: Hauptspannungen
- 69: Hauptspannungen

## Patentansprüche

1. Türrahmenanordnung für einen Rumpf insbesondere eines Luft- oder Raumfahrzeugs,
mit einem Türausschnitt (20) in dem Rumpf (10),
wobei zumindest ein Bereich (11) des Rumpfes (10) um den Türausschnitt (20) in Semimonocoque-Bauweise mit einer Haut (12), Stringern (13) und Spanten (14) aufgebaut ist,
mit einer verschließbaren Tür (30) in dem Türausschnitt (20),
welche in Semimonocoque-Bauweise mit einer Haut (32), Querversteifungselementen (33) und Längsversteifungselementen (34) aufgebaut ist,
**dadurch gekennzeichnet,**
**dass** in dem Bereich (11) des Rumpfes (10) um den Türausschnitt (20) benachbart zu zumindest einer Ecke (21, 22, 23, 24) des Türausschnitts (20) mindestens ein zusätzliches Versteifungselement (41, 42, 43, 44) angeordnet ist, welches mit den Stringern (13) und Spanten (14) des Flugzeugrumpfes (10) in diesem Bereich (11) ein lokales Fachwerksystem (51) bildet, und
**dass** in der Tür (30) mindestens ein zusätzliches Versteifungselement (46, 48) angeordnet ist, welches bei verschlossener Tür (30) mit den Stringern (13) und Spanten (14) des Bereiches (11) des Flugzeugrumpfes (10) um den Türausschnitt (20) ein lokales Fachwerksystem (53) bildet, und
**dass** das zusätzliche Versteifungselement (46, 48) an der Verbindungslinie zwischen der Tür (30) und dem Bereich (11) des Flugzeugrumpfes (10) um den Türausschnitt (20) kraftschlüssige, lösbare Verbindungen (57, 58) aufweist.

2. Türrahmenanordnung nach Anspruch 1,
**dadurch gekennzeichnet,**
**dass** bei einer Tür (30) in einem Türausschnitt (20) mit vier Ecken (21, 22, 23, 24) der Bereich (11) des Rumpfes (10) um den Türausschnitt (20) benachbart zu allen vier Ecken (21 , 22, 23, 24) mit zusätzlichen Versteifungselementen (41, 42, 43, 44) ausgerüstet ist.

3. Türrahmenanordnung nach Anspruch 1 oder 2,
**dadurch gekennzeichnet,**
**dass** die zusätzlichen Versteifungselemente (41, 42, 43, 44) des Bereiches (11) des Rumpfes (10) um den Türausschnitt (20) und/oder die zusätzlichen Versteifungselemente (46, 48) der Tür (30) stabförmig ausgebildete Elemente sind.

4. Türrahmenanordnung nach einem der vorstehenden Ansprüche,
**dadurch gekennzeichnet,**
**dass** die zusätzlichen Versteifungselemente des Bereiches (11) des Rumpfes (10) um den Türausschnitt (20) und/oder die zusätzlichen Versteifungselemente (46, 48) der Tür (30) ein gekrümmtes Versteifungssystem bilden.

5. Türrahmenanordnung nach einem der vorstehenden Ansprüche,
**dadurch gekennzeichnet,**
**dass** die zusätzlichen Versteifungselemente in dem Bereich (11) des Rumpfes (10) um den Türausschnitt (20) jeweils diagonal zu den Stringern (13) und Spanten (14) angeordnete und tangential zum Umriss des Türausschnittes (20) verlaufende stabförmige Elemente aufweisen.

6. Türrahmenanordnung nach einem der vorstehenden Ansprüche,
**dadurch gekennzeichnet,**
**dass** die zusätzlichen Versteifungselemente (46, 48) der Tür (30) diagonal und insbesondere geradlinig von einer Ecke (21) zur schräg gegenüberliegenden Ecke (23) des Türausschnitts (20) verlaufen oder nach Art eines Rhombus' mittels vier stabförmigen Elementen die vier Seitenhalbierenden einer viereckigen Tür miteinander verbinden, wobei der Rhombus in einer oder in mehreren Ebenen angeordnet ist.

7. Türrahmenanordnung nach einem der vorstehenden Ansprüche,
**dadurch gekennzeichnet,**
**dass** der Bereich (11) des Rumpfes (10) um den Türausschnitt (20) zusätzlich zu den Stringern (13) und Spanten (14) mit Interkostalstreben (15) ausgestattet ist, welche mit den zusätzlichen Versteifungselementen (41, 42, 43, 44) und den Stringern (13) und Spanten (14) die lokalen Fachwerkelemente (51, 52) aufbauen.

8. Türrahmenanordnung nach einem der vorstehenden Ansprüche,
**dadurch gekennzeichnet,**
**dass** zumindest der Bereich (11) des Rumpfes (10) um den Türausschnitt (20) und/oder die Tür (30) aus Faserverbundwerkstoffen aufgebaut sind.

9. Türrahmenanordnung nach Anspruch 8,
**dadurch gekennzeichnet,**
**dass** die zusätzlichen Versteifungselemente (41, 42, 43, 44) des Bereiches (11) des Rumpfes (10) um den Türausschnitt (20) und/oder die zusätzlichen Versteifungselemente (46, 48) der Tür (30) aus Faserverbundwerkstoffen bestehen und einen unidirektional (UD) dominierten Laminataufbau aufweisen.

10. Türrahmenanordnung nach einem der vorstehenden Ansprüche,
**dadurch gekennzeichnet,**
**dass** die kraftschlüssigen, lösbaren Verbindungen (57, 58) der zusätzlichen Versteifungselemente (46, 48) der Tür (30) an den Verbindungen der Tür (30) mit dem Bereich (11) um den Türausschnitt (20) zugleich door stops (27) bilden.
